# EUROPÄISCHE PATENTSCHRIFT

(11) **EP 1 028 516 B1**
(45) Veröffentlichungstag und Bekanntmachung des Hinweises auf die Patenterteilung: **05.10.2005**
(21) Anmeldenummer: 00102720.0
(22) Anmeldetag: 10.02.2000
(51) Int. Cl.: H02K 29/08, H02P 6/16, D06F 37/30

(54) **Synchronmotor mit Rotorlage-Erkennung**
Synchronous motor with rotor position detection
Moteur synchrone avec détection de la position du rotor

(30) Priorität: 12.02.1999 DE 19905810
(43) Veröffentlichungstag der Anmeldung: 16.08.2000
(73) Patentinhaber: Diehl AKO Stiftung & Co. KG, 88239 Wangen im Allgäu (DE)
(72) Erfinder: Zeh, Stefan, 88239 Wangen (DE)
(74) Vertreter: Diehl Patentabteilung

(56) Entgegenhaltungen:
- DE-A- 19 738 344
- PATENT ABSTRACTS OF JAPAN vol. 009, no. 284 (E-357), 12. November 1985 (1985-11-12) -& JP 60 125143 A (MATSUSHITA DENKI SANGYO KK), 4. Juli 1985 (1985-07-04)
- PATENT ABSTRACTS OF JAPAN vol. 1995, no. 08, 29. September 1995 (1995-09-29) -& JP 07 131965 A (VICTOR CO OF JAPAN LTD), 19. Mai 1995 (1995-05-19)

## Beschreibung

Die Erfindung betrifft einen Synchronmotor nach dem Oberbegriff des Anspruches 1.

Es sind bereits Synchronmotoren bekannt mit einem aus mehreren Elektromagneten bestehenden Stator und einem aus Permanentmagneten bestehenden, mehrere Polpaare aufweisenden Rotor, die in der Fachwelt auch als elektrisch kommutierte Gleichstrommotoren bzw. Brushless DC-Motoren, bezeichnet werden. Weiterhin ist bekannt, daß sich bei diesen Motoren am Stator ein oder mehrere, ortsfest befestigte Magnetfeldsensoren befinden. Wie z. B. in der EP 0 094 978 A1 oder in der DE 195 27 982 A1 offenbart, kann mit Hilfe der Magnetfeldsensoren die Rotorlage, die Drehzahl und/oder die Drehrichtung des Motors erfaßt werden, damit die Elektromagnete des Stators in möglichst vorteilhafter Weise angesteuert werden können. Bei Rotoren, welche mehr als ein Polpaar aufweisen, kann mit dieser Methode jedoch nicht die absolute Rotorlage bestimmt werden, da die einzelnen Polpaare voneinander nicht zu unterscheiden sind.

Bei einigen Anwendungen ist die Bestimmung der absoluten Lage des Rotors bzw. eines von dem Elektromotor angetriebenen Bauteils erforderlich. So muß zum Beispiel bei einer Waschmaschine in Topladerbauweise die sich um eine horizontale Achse drehende Waschtrommel nach Programmende in einer definierten Position stehen bleiben, damit ein Entnehmen bzw. Wiedereinlegen der Wäsche möglich ist. Nach der EP 0 754 797 A1 wird eine solche Positionierung der Waschtrommel mit Hilfe eines Sensorsystems erreicht, von dem der aktive Teil ortsfest am Gehäuse und der passive Teil an der Trommel bzw. an deren Riemenscheibe, mit selbiger drehbar, befestigt ist. Nach der EP 0 681 050 A2 wird eine absolute Positionierung der Trommel mit Hilfe eines Haltearmes erreicht, welcher in entsprechende Einsparungen in der Trommel eingreift.

Aus der DE 197 38 344 A1 ist ein Synchronmotor gemäß dem Oberbegriff des Anspruches 1 bekannt. Dort weist der Rotor eines bürstenlosen Gleichstrommotors Permanentmagnete mit in tangentialer Richtung wiederholt wechselnden magnetischen Nord- und Südpolen auf. Ein Nordpol in einem dieser Permanentmagnete weist einen leicht demagnetisierten Abschnitt auf, der in einem Abfall in der magnetischen Feldintensität an diesem Punkt resultiert. Dadurch kann dieser so ausgezeichnete Permanentmagnet im Betrieb von einem Magnetfeldsensor (z. B. einem Hall-Sensor) detektiert werden, wodurch die absolute Rotorposition bestimmt werden kann. Jedoch ist die von einem Magnetfeldsensor detektierte Feldänderung und somit auch das von dem Sensor abgegebene Signal recht schwach.

Ein stärkeres Signal ergibt sich, wenn in einem Permanentmagnetrotor mit tangential polarisierten Magneten eine Aussparung etwa in der Mitte eines Permanentmagneten (d h. zwischen Nord- und Südpol) ausgeformt und in diese ein kleiner Magnet derart eingesetzt wird, dass seine Polarisation ebenfalls tangential, aber der Polarisation des Rotormagneten entgegengesetzt ausgebildet ist, wie dies in der JP 60-125143 beschrieben ist. Die Herstellung eines solchen Rotors ist jedoch recht aufwendig.

Ausgehend von dem Stand der Technik liegt der Erfindung somit die Aufgabe zugrunde, einen Synchronmotor zu schaffen, bei welchem der sich von den übrigen Magneten unterscheidende Permanentmagnet einfach herzustellen ist und gleichzeitig ein starkes Signal des oder der Magnetfeldsensoren gewährleistet ist.

Diese Aufgabe wird durch einen Synchronmotor mit den Merkmalen des Anspruches 1 erfüllt. Ausführungsformen und Weiterbildungen ergeben sich aus den Unteransprüchen.

Indem auf dem Umfang des Rotors benachbart liegende Permanentmagnete derart entgegengesetzt polarisiert sind, dass der Nordpol eines der Permanentmagnete auf dem äußeren und der Südpol auf dem inneren Umfang des Rotors liegen, während sich der Nordpol eines benachbarten Permanentmagneten auf dem inneren und der Südpol auf dem äußeren Umfang des Rotors befinden, und der sich von den übrigen Permanentmagneten unterscheidende Permanentmagnet einen Bereich aufweist, welcher eine der Magnetisierung dieses Permanentmagneten entgegengesetzte Polarisation besitzt, ist ein Rotor mit einer einfach herzustellenden, aber gleichzeitig eine starke Feldänderung und somit ein starkes Signal der Magnetfeldsensoren hervorrufender "Nullmarke" geschaffen, die im Betrieb von den Magnetfeldsensoren leicht detektiert werden kann, um die Absolutlage des Rotors zu bestimmen.

In bevorzugter Ausführungsform ist vorgesehen, dass die Magnetfeldsensoren den Bereich mit entgegengesetzter Polarisation in dem ausgezeichneten Permanentmagneten beim Vorbeilauf detektieren, dass mit Hilfe der Signale der Magnetfeldsensoren in einer Auswerteeinheit die Absolutlage des Rotors bestimmt, an eine Steuereinheit weitergeleitet und dort bei der Motorsteuerung berücksichtigt wird. Diese Berücksichtigung kann z.B. derart erfolgen, dass der Rotor beim Abstellen des Motors in einer vorher bestimmbaren, definierten Position stehen bleibt.

Somit kann der erfindungsgemäße Synchronmotor z.B. in einer Waschmaschine direkt an der Trommelachse montiert und als Direktantrieb betrieben werden, wobei bei Toplader-Waschmaschinen sichergestellt ist, dass die Wäschetrommel nach Programmende in einer gewünschten, definierten Position stehen bleibt.

Der entgegengesetzt polarisierte Teilbereich befindet sich an beliebiger Stelle in dem betreffenden Permanentmagneten, in vorteilhafter Weise jedoch etwa in der Mitte oder auf einer Seite des ausgezeichneten Permanentmagneten, und er erstreckt sich über die gesamte Höhe des betreffenden Permanentmagneten oder bevorzugt nur über den von den ortsfest befestigten Magnetfeldsensoren erfaßten Teil der Höhe des Permanentmagneten.

Anhand der Zeichnungen wird im folgenden ein Ausführungsbeispiel der Erfindung näher erläutert. Es zeigen in stark schematisierter Darstellung
- Figur 1: einen Rotor mit drei Polpaaren, Auswerte- und Steuereinheit nach dem Stand der Technik,
- Figur 2: ein Detektionsmuster von drei Hall-Sensoren als Magnetfeldsensoren nach dem Stand der Technik,
- Figur 3: einen erfindungsgemäßen Rotor mit drei Polpaaren, Auswerte- und Streuereinheit,
- Figur 4: ein Detektionsmuster von drei Hall-Sensoren als Magnetfeldsensoren gemäß der Erfindung und
- Figur 5: den abgewickelten Innenumfang des erfindungsgemäßen Rotors von Figur 3.

Nach dem Stand der Technik, wie er z. B in der EP 0 094 978 A1 oder in der DE 195 27 982 A1 offenbart ist, ist ein mehrpoliger (z. B. dreipoliger) Rotor 1 aus mehreren, in dem Beispiel sechs Permanentmagneten 2 bis 7 aufgebaut, die sich nebeneinander liegend auf dem Umfang des Rotors 1 verteilen. Die Magnetisierung der einzelnen Permanentmagnete ist derart, daß benachbarte Magnete entgegengesetzt polarisiert sind. So liegt der Nordpol des Permanentmagneten 2 auf dem äußeren und der Südpol auf dem inneren Umfang des Rotors 1, während sich die Nordpole der benachbarten Permanentmagnete 3 und 7 auf dem inneren und die Südpole auf dem äußeren Umfang des Rotors 1 befinden. Auf dem Rotor 1 gegenüberliegende Permanentmagnete (z. B. 2 und 5) bilden ein Polpaar, sodaß mit sechs Permanentmagneten ein Rotor 1 mit drei Polpaaren realisierbar ist.

Die Magnetisierung der Permanentmagnete 2 bis 7 wird hergestellt, indem starke Elektromagnete nahe an den inneren bzw. äußeren Umfang des Rotors 1 gebracht werden und durch ihr starkes Magnetfeld den aus ferromagnetischem Material bestehenden, ursprünglich nicht magnetisierten Rotor 1 in der gewünschten und oben beschriebenen Weise polarisieren. Der Rotor 1 kann dabei aus physisch einheitlichem, also nicht aus mehreren Teilen zusammengesetztem Material bestehen.

Die Magnetfeldsensoren 8, 9 und 10 (im allgemeinen Hall-Sensoren) sind ortsfest, also nicht mit dem Rotor drehbar befestigt und befinden sich im Bereich 11 innerhalb des Rotors 1 nahe an dessen innerem Umfang. Sie sind jeweils in einem Abstand von zwei Dritteln der Länge eines Permanentmagneten angeordnet, was einer Phasenverschiebung von 120° entspricht. Sie detektieren die Polarität des sich in ihrer unmittelbaren Nähe befindlichen Teilbereichs des Rotors 1.

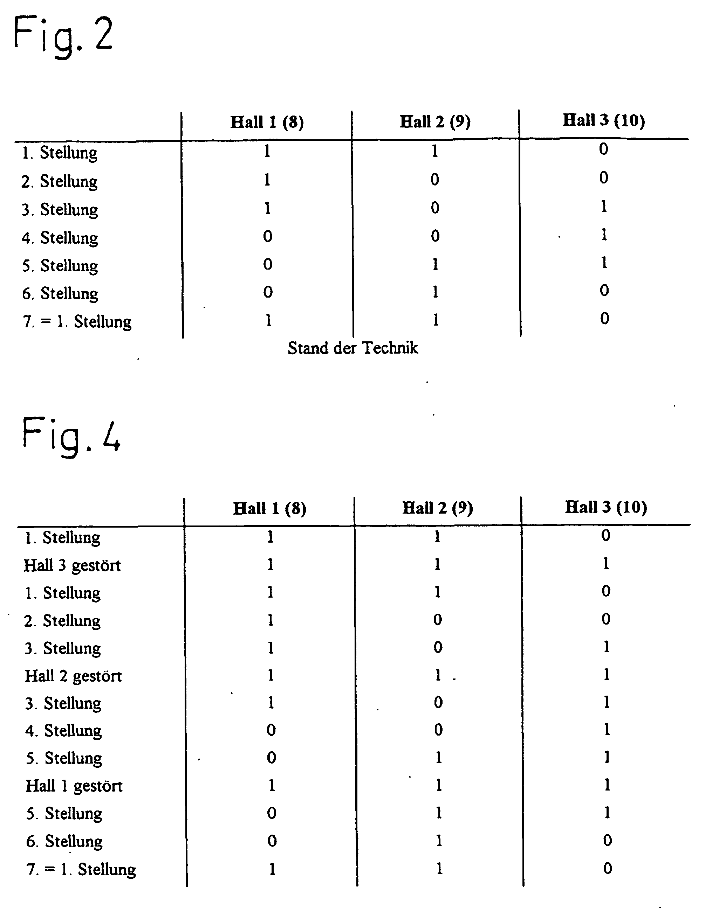

In der Tabelle in Fig. 2 ist das Detetkionsmuster von drei als Magnetfeldsensoren 8-10 dienenden Hall-Sensoren (Hall 1, Hall 2 und Hall 3) für sechs verschiedene Stellungen des Rotors angegeben. Dabei ist das Signal eines Hall-Sensors "1") wenn er einen Nordpol detektiert, und "0", wenn er einen Südpol detektiert. Zwischen den einzelnen Stellungen ist der Rotor um ein Drittel der Länge eines Permanentmagneten weitergedreht, was einer Phasenverschiebung von 60° und bei drei Polpaaren auf dem Rotor 1 einer Rotordrehung um 20° entspricht. Nach sechs Dreh-Schritten (Phasenverschiebung 360°) detektieren die Hall-Sensoren wieder dasselbe Muster wie in der Ausgangsstellung.

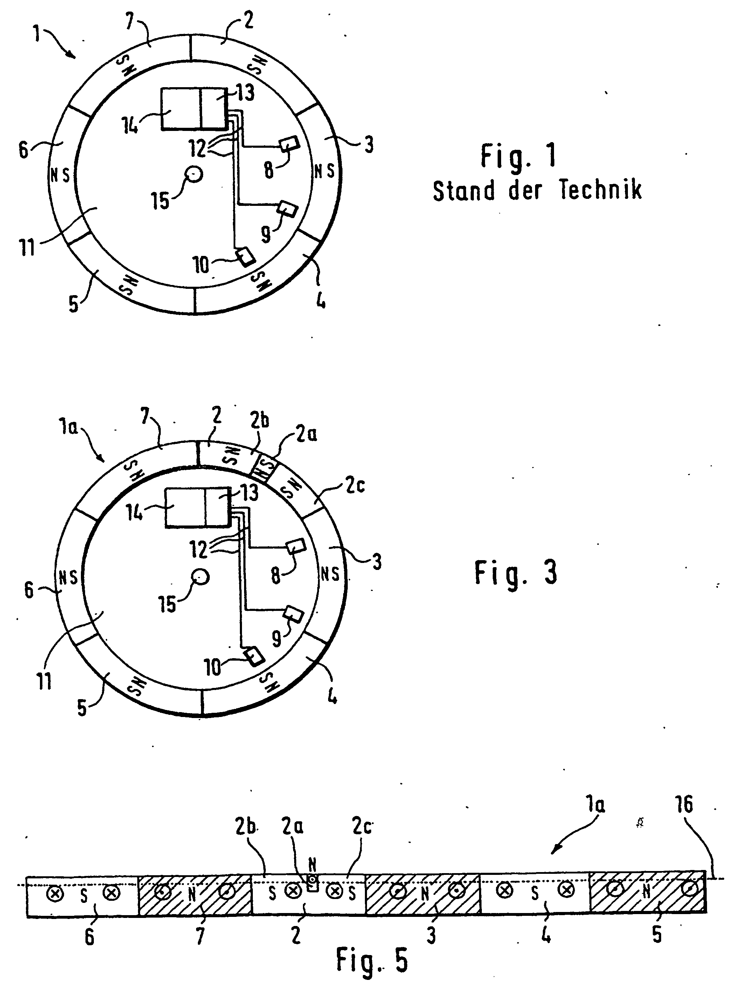

Die in Fig. 2 gezeigten Detektionsmuster ergeben sich bei Drehung des Rotors 1 in Fig. 1 gegen den Uhrzeigersinn. Dabei "wandern" die Magnetpole von Hall 3 über Hall 2 zu Hall 1. Dabei zeigen stets nur zwei der drei Hall-Sensoren eine gleiche Magnetisierung an (z. B. "1"), während der dritte Hall-Sensor jeweils die andere Magnetisierung (z. B. "0") anzeigt.

Die Signale der Magnetfeldsensoren 8, 9 und 10 gelangen über Leitungen 12 in die Auswerteeinheit 13 (Fig. 1). Dort wird mit Hilfe der Sensorsignale die Relativposition des Rotors, d. h. die Verteilung der nach innen weisenden Nord- und Südpole des Rotors über den Umfang des inneren Bereiches 11 ermittelt. Durch Berücksichtigung des zeitlichen Verlaufs der Sensorsignale werden darüber hinaus noch Drehrichtung und Drehzahl des Rotors 1 in der Auswerteeinheit 13 bestimmt. Eine absolute Lageerkennung des Rotors 1 ist nicht möglich.

Die Auswerteeinheit 13 leitet die Daten über Relativposition, Drehrichtung und Drehzahl des Rotors 1 an eine Steuereinheit 14 weiter, welche mit Hilfe dieser Daten die Elektromagnete eines Stators, welcher sich im inneren Bereich 11 ortsfest um die Rotordrehachse 15 herum befindet, ansteuert. Am Stator sind pro Polpaar des Rotors drei Elektromagnete, welche jeweils mit 120° Phasenverschiebung angesteuert werden, vorgesehen, so daß bei einem Rotor mit drei Polpaaren der Stator aus neun Elektromagneten besteht. Der Übersichtlichkeit halber ist der Stator in der Zeichnung nicht gezeigt. Auswerte- 13 und Steuereinheit 14 sowie die Leitungen 12 sind nur schematisch angedeutet und müssen sich keineswegs im inneren Bereich 11 des Rotors 1 befinden. Sie können auch in einer einzigen Elektronikeinheit integriert sein.

Der in Figur 3 gezeigte erfindungsgemäße Rotor 1a weist in der Mitte des Permanentmagneten (2) einen Bereich 2a auf, der entgegengesetzt zu der Magnetisierung des übrigen Teils des Permanentmagneten 2 (Bereiche 2b und 2c) polarisiert ist. Bei Bereich 2a liegt der Nordpol auf dem inneren Umfang des Rotors 1a, während bei Bereich 2b und 2c jeweils der Südpol auf dem inneren Umfang liegt. Somit ist der Permanentmagnet 2 gegenüber den Magneten 3 bis 7 ausgezeichnet und von diesen unterscheidbar.

Passiert nun der Teilbereich 2a die Hall-Sensoren, so entsteht ein Detektionsmuster, welches ohne die "Störstelle" 2a nicht vorhanden wäre. Alle drei Hall-Sensoren zeigen - für kurze Zeit, aber gleichzeitig - die gleiche Magnetisierung an. Aus der Tabelle in Fig. 4 ist klar zu sehen, daß im dargestellten Ausführungsbeispiel immer bei dem Muster "111" der Bereich 2a einen der Magnetfeldsensoren passiert. Aus dem Muster vor und nach dieser "Störung" kann darüber hinaus festgestellt werden, welcher der drei Magnetfeldsensoren gerade von dem Bereich 2a passiert wird, denn genau dieser Sensor zeigt kurz vor und kurz nach der Passage eine entgegengesetzte Magnetisierung an. Dadurch ist eine eindeutige Lokalisierung des Bereiches 2a und somit auch eine Bestimmung der absoluten Rotorlage möglich.

Wird nur ein einziger Magnetfeldsensor zur Rotorlagebestimmung eingesetzt, so kann der Bereich 2a bei einem solchen Betriebszustand des Motors detektiert werden, bei welchem sich die Motordrehzahl zeitlich nur geringfügig geändert und so das Signal des einzigen Magnetfeldsensors beim Passieren des Bereichs 2a mit deutlich höherer Frequenz wechselt als beim Passieren der restlichen Magnete 3 bis 5. Ist der Bereich 2a einmal identifiziert, so kann die Auswerteeinheit 13 das Passieren der Magnete mitzählen und so auch bei dynamischen Motorbewegungen die Störstelle 2a als solche erkennen.

Nach der Detektion des entgegengesetzt polarisierten Teilbereiches 2a durch einen der Magnetfeldsensoren 8, 9 oder 10 zählt die Auswerteeinheit 13 die nach dieser Detektion an dem betreffenden Magnetfeldsensor vorbeistreichenden Nord- und Südpole des Rotors und bestimmt so zu jeder Zeit die momentane Lage des Teilbereiches 2a und damit die Absolutlage des Rotors 1a, auch wenn sich der Bereich 2a des Rotors 1a im Moment nicht in der Nähe eines der Magnetfeldsensoren 8, 9 oder 10 befindet.

Aus dem zeitlichen Verlauf der Signale der Magnetfeldsensoren werden neben der absoluten Rotorposition auch Drehrichtung und Drehzahl des Rotors 1a bestimmt. Rotorposition, -drehrichtung und -drehzahl werden an die Steuereinheit 14 weitergeleitet, welche diese Daten bei der Ansteuerung der Elektromagnete des Stators berücksichtigt. Auf diese Weise ist die Steuereinheit 14 in der Lage, den Motor so anzusteuern, daß der Rotor 1a in einer vorbestimmten absoluten Position stehen bleibt.

Die der Magnetisierung der Bereiche 2b und 2c des Permanentmagneten 2 entgegengesetzte Polarisation des Teilbereichs 2a wird analog zu der Magnetisierung des gesamten Rotors 1a mit Hilfe eines Elektromagneten bewerkstelligt, dessen elektrisches Feld sich jedoch nur auf den Teilbereich 2a erstreckt und der Magnetisierung der angrenzenden Bereiche 2b und 2c entgegengesetzt ist.

Die Lage des entgegengesetzt magnetisierten Teilbereichs 2a ist - wie in dem oben dargestellten Ausführungsbeispiel - vorzugsweise etwa in der Mitte des Permanentmagneten 2. Es ist aber auch genauso denkbar, den Teilbereich 2a näher oder gar direkt anschließend an die benachbarten Permanentmagnete 3 oder 7 zu positionieren. Ebenso ist es möglich, in dem Permanentmagneten 2 mehr als einen entgegengesetzt polarisierten Teilbereich 2a vorzusehen. Bei langsam drehenden Synchronmotoren kann es sogar wünschenswert sein, in anderen Permanentmagneten außer 2 (z. B. 5 oder auch 4 und 6) ebenfalls Teilbereiche mit gegenüber der dort vorhandenen Magnetisierung entgegengesetzter Polarisation vorzusehen, damit die Magnetfeldsensoren 8, 9 und 10 nicht nur einmal, sondern mehrmals (z. B. 2- oder 3-mal) pro Rotorumdrehung die Absolutlage des Rotors detektieren. Dabei müssen sich allerdings die Permanentmagnete, welche entgegengesetzt polarisierte Teilbereiche aufweisen, wiederum voneinander unterschieden, indem die Lage, die Ausdehnung und/oder die Anzahl der entgegengesetzt polarisierten Bereiche in den betreffenden Permanentmagneten unterschiedlich sind. Bei all diesen alternativen Ausführungsformen der Erfindung muß natürlich die Auswertung der Signale des bzw. der Magnetfeldsensoren entsprechend abgeändert bzw. angepaßt werden.

Damit der entgegengesetzt polarisierte Teilbereich 2a die Motorcharakteristik, vor allem die Laufruhe und das Drehmoment des Synchronmotors möglichst gering beeinflußt, ist seine Ausdehnung so klein wie möglich bemessen, aber noch groß genug, damit er im Betrieb von den Magnetfeldsensoren 8, 9 und 10 detektiert wird. Weiterhin ist, wie aus der Darstellung des abgewickelten inneren Umfangs des Rotors 1a in Figur 5 ersichtlich, in vorteilhafter Ausführung der Erfindung vorgesehen, daß sich der Teilbereich 2a nicht über die gesamte Höhe des Permanentmagneten 2 erstreckt, sondern nur über den Teil, welcher von den Magnetfeldsensoren 8, 9 und 10 abgetastet wird (gepunktete Linie 16).

## Patentansprüche

1. Synchronmotor mit einem Elektromagnete aufweisenden Stator, einem Permanentmagnete (2-7), welche mehrere Polpaare bilden, aufweisenden Rotor (1a), mindestens einem ortsfest befestigten Magnetfeldsensor (8-10) sowie einer Auswerte- (13) und einer Steuereinheit (14),
wobei mindestens einer der Permanentmagnete (2) des Rotors (1a) sich von den übrigen in seiner Magnetisierung unterscheidet und dieser so ausgezeichnete Permanentmagnet (2) im Betrieb von mindestens einem Magnetfeldsensor (8-10) detektiert wird,
**dadurch gekennzeichnet,**
**dass** benachbart auf dem Umfang des Rotors (1a) liegende Permanentmagnete (2-7) derart entgegengesetzt polarisiert sind, dass der Nordpol eines der Permanentmagnete (2-7) auf dem äußeren und der Südpol auf dem inneren Umfang des Rotors (1a) liegen, während sich der Nordpol eines benachbarten Permanentmagneten (2-7) auf dem inneren und der Südpol auf dem äußeren Umfang des Rotors (1 a) befinden, und
**dass** der sich von den übrigen Permanentmagneten (3-7) unterscheidende Permanentmagnet (2) mindestens einen Bereich (2a) aufweist, welcher eine der Magnetisierung dieses Permanentmagneten (2) entgegengesetzte Polarisation besitzt.

2. Synchronmotor nach Anspruch 1,
**dadurch gekennzeichnet,**
**daß** die ortsfest befestigten Magnetfeldsensoren (8-10) den sich von den übrigen Permanentmagneten (3-7) des Rotors in seiner Magnetisierung unterscheidenden Permanentmagneten (2) detektiert, wenn dieser an ihm vorbeiläuft,
**daß** in der Auswerteeinheit (13) mit Hilfe der Signale mindestens eines Magnetfeldsensors (8-10) die Absolutposition des Rotors (1a) bestimmt wird und daß die Absolutposition des Rotors (1a) an die Steuereinheit (14) weitergeleitet und dort bei der Ansteuerung des Motors in der Weise berücksichtigt wird, daß der Rotor bei Abstellen des Motors in einer definierten, vorher bestimmbaren Position stehen bleibt.

3. Synchronmotor nach Anspruch 1,
**dadurch gekennzeichnet,**
**dass** sich der Bereich (2a) mit entgegengesetzter Polarisation im wesentlichen in der Mitte des sich unterscheidenden Permanentmagneten (2) befindet.

4. Synchronmotor nach Anspruch 1,
**dadurch gekennzeichnet,**
**daß** sich der Bereich (2a) mit entgegengesetzter Polarisation auf einer Seite des sich unterscheidenden Permanentmagneten (2) befindet.

5. Synchronmotor nach einem der Ansprüche 1, 3 oder 4,
**dadurch gekennzeichnet,**
**daß** sich der Bereich (2a) mit entgegengesetzter Polarisation nur über den von den Magnetfeldsensoren (8-10) erfaßten Teil der gesamten Höhe des sich unterscheidenden Permanentmagneten (2) erstreckt.

6. Synchronmotor nach Anspruch 3,
**dadurch gekennzeichnet,**
**daß** drei Magnetfeldsensoren (8-10) vorgesehen sind, welche mit einem Abstand voneinander angebracht sind, der einer Phasenverschiebung von 120° entspricht,
**daß** bei gleichzeitiger Detektion derselben Magnetisierung durch alle drei Magnetfeldsensoren auf das Passieren des entgegengesetzt polarisierten Bereichs (2a) an einem der Magnetfeldsensoren geschlossen wird und
**daß** aufgrund der vor oder nach dieser Passage des Bereichs (2a) von den Magnetfeldsensoren detektierten Magnetisierung darauf geschlossen wird, an welchem Magnetfeldsensor die Passage stattgefunden hat.

## Claims

1. Synchronous motor with a stator having electromagnets, a rotor (1a) having permanent magnets (2-7) which form .two or more pole pairs, at least one magnetic field sensor (8-10) which is fixed in position, an evaluation unit (13) and a control unit (14), at least one of the permanent magnets (2) of the rotor (1a) being different from the other permanent magnets in terms of its magnetization, and this permanent magnet (2) which is distinguished in this manner being detected during operation by at least one magnetic field sensor (8-10), **characterized in that** permanent magnets (2-7) lying next to one another on the circumference of the rotor (1a) are polarized in opposition to one another such that the north pole of one of the permanent magnets (2-7) lies on the outer circumference of the rotor (1a) and the south pole lies on the inner circumference of the rotor (1a), whereas the north pole of an adjacent permanent magnet (2-7) is located on the inner circumference of the rotor (1a) and the south pole is located on the outer circumference of the rotor (1a), and **in that** the permanent magnet (2) which is different from the other permanent magnets (3-7) has at least one region (2a) which has an opposite polarization to the magnetization of this permanent magnet (2).

2. Synchronous motor according to Claim 1,
**characterized in that** the magnetic field sensors (8-10) which are fixed in position detect the permanent magnet (2) which is different from the other permanent magnets (3-7) of the rotor in terms of its magnetization when said permanent magnet (2) passes by them, **in that** the absolute position of the rotor (1a) is determined in the evaluation unit (13) with the aid of the signals from at least one magnetic field sensor (8-10), and **in that** the absolute position of the rotor (1a) is passed on to the control unit (14) and is taken into consideration there when driving the motor such that the rotor remains in a defined position, which can be determined in advance, when the motor is switched off.

3. Synchronous motor according to Claim 1,
**characterized in that** the region (2a) of opposite polarization is located essentially in the centre of the different permanent magnet (2).

4. Synchronous motor according to Claim 1,
**characterized in that** the region (2a) of opposite polarization is located on one side of the different permanent magnet (2).

5. Synchronous motor according to one of Claims 1, 3 or 4, **characterized in that** the region (2a) of opposite polarization extends only over that part of the entire height of the different permanent magnet (2) which is covered by the magnetic field sensors (8-10).

6. Synchronous motor according to Claim 3,
**characterized in that** three magnetic field sensors (8-10) are provided which are fitted at a distance from one another which corresponds to a phase shift of 120°, **in that**, in the event of all three magnetic field sensors simultaneously detecting the same magnetization, it is concluded that the region (2a) of opposite polarization has passed one of the magnetic field sensors, and **in that** it is ascertained which of the magnetic field sensors has been passed on the basis of the magnetization detected by the magnetic field sensors before or after the region (2a) passes them in this way.

## Revendications

1. Moteur synchrone comprenant un stator qui présente un électroaimant, un rotor (1a) qui présente un aimant permanent (2-7) qui forment plusieurs paires de pôles, au moins un capteur de champ magnétique (8-10) fixé en en endroit fixe ainsi qu'une unité d'évaluation (13) et une unité de commande (14), au moins l'un des aimants permanents (2) du rotor (1a) se différenciant des autres par sa magnétisation et cet aimant permanent (2) ainsi démarqué étant détecté en fonctionnement par au moins un capteur de champ magnétique (8-10), **caractérisé en ce que** les aimants permanents (2-7) disposés les uns à côté des autres sur le pourtour du rotor (1a) sont polarisés en opposition de telle sorte que le pôle nord de l'un des aimants permanents (2-7) se trouve sur le pourtour extérieur du rotor (1a) et le pôle sud sur le pourtour intérieur, alors que le pôle nord d'un aimant permanent (2-7) voisin se trouve sur le pourtour intérieur du rotor (1a) et le pôle sud sur le pourtour extérieur, et que l'aimant permanent (2) qui se différencie des autres aimants permanents (3-7) présente au moins une zone (2a) qui possède une polarisation opposée à la magnétisation de cet aimant permanent (2).

2. Moteur synchrone selon la revendication 1, **caractérisé en ce que** les capteurs de champ magnétique (8-10) fixés en un endroit fixe détectent l'aimant permanent (2) qui se différencie des autres aimants permanents (3-7) du rotor par sa magnétisation lorsque celui-ci passe devant celui-ci, que la position absolue du rotor (1a) est déterminée dans l'unité d'évaluation (13) à l'aide des signaux d'au moins un capteur de champ magnétique (8-10) et que la position absolue du rotor (1a) est transmise à l'unité de commande (14) où elle est prise en compte lors de la commande du moteur **en ce que** le rotor, lors de l'arrêt du moteur, reste immobilisé dans une position donnée pouvant être définie à l'avance.

3. Moteur synchrone selon la revendication 1, **caractérisé en ce que** la zone (2a) de polarisation opposée se trouve pour l'essentiel au centre de l'aimant permanent qui se différencie (2).

4. Moteur synchrone selon la revendication 1, **caractérisé en ce que** la zone (2a) de polarisation opposée se trouve d'un côté de l'aimant permanent qui se différentie (2).

5. Moteur synchrone selon l'une des revendications 1, 3 ou 4, **caractérisé en ce que** la zone (2a) de polarisation opposée ne s'étend que sur la partie de la hauteur totale de l'aimant permanent qui se différencie (2) qui est détectée par les capteurs de champ magnétique (8-10).

6. Moteur synchrone selon la revendication 3, **caractérisé en ce que** trois capteurs de champ magnétique (8-10) sont prévus, lesquels sont montés avec un écart entre eux qui correspond à un déphasage de 120°, que la détection simultanée de la même magnétisation par les trois capteurs de champ magnétique amène à déduire le passage de la zone (2a) de polarisation opposée au niveau de l'un des capteurs de champ magnétique et que la magnétisation détectée par les capteurs de champ magnétique avant ou après ce passage de la zone (2a) amène à déduire le capteur de champ magnétique au niveau duquel a eu lieu le passage.
